# EUROPEAN PATENT APPLICATION

(11) **EP 1 195 697 A2**
(43) Date of publication of application: **10.04.2002**
(21) Application number: 01308347.2
(22) Date of filing: 28.09.2001
(51) Int. Cl.: G06F 17/30

(54) **Full information set delivery**

(30) Priority: 03.10.2000 US 678648
(71) Applicant: Hewlett-Packard Company, Palo Alto, CA 94304 (US)
(72) Inventor: Brown, William P., Corvallis, OR 97330 (US)
(74) Representative: Jackson, Richard Eric

(57) **Abstract**

A user of a limited capacity presentation apparatus (125) may request a full length information set be sent to an essentially non-limited capacity presentation apparatus (113, 115). A truncated or compressed information set is displayed on the limited capacity presentation apparatus for the user to select for more information.

## Description

### Background

The present invention is generally related to the delivery of information and more particularly to a method and apparatus for delivering a truncated information set to a limited capacity presentation apparatus and delivery of the full information set to a non-limited capacity presentation apparatus.

Portable and hand carried devices that link users to communication services have become increasingly popular and widespread. Cellular telephones, as an example, are routinely carried by people and are expected to provide two way voice communication virtually anywhere. The increasing activity people are experiencing with the Internet (or world wide web) and other digital two way communication services at a fixed location, such as a home computer, have spurred the development of portable interconnections to the Internet. Cellular telephones are being produced with features that encourage connection to and are compatible with the Internet. Likewise, developments in personal digital assistants (PDAs) have moved these products from mundane calendering devices to nearly full capability computing devices. Synchronization between a PDA and a user's full capability computer (or computer network) provides an opportunity for e-mail to be downloaded to the PDA, calendar and schedule changes to be recorded, and other updates to be made to information stored in the PDA. The PDA user may then, at leisure, review the updated information. Pagers and paging devices are also experiencing enhanced digital capabilities leading to interfaces with the Internet.

Many content providers, such as news, financial, or sports organizations, are offering relatively instant content delivery - alerts - to the portable communication devices. For a cellular telephone these alerts are typically short headlines compatible with a viewing screen having a few lines and a few characters per line - a limited capacity presentation apparatus. Advanced paging devices can be activated for the user and a short message displayed in the character display window. PDAs that offer radio frequency interconnection to an internet service provider (ISP) thence to the Internet have been provided the capability of receiving alerts when the user is logged-on and displaying the alert information on a limited capacity screen. Accordingly, the information shown is a truncated or summarized version of a full length story, compressed to fit the limited capacity screen. Additionally, subscribers to news services and the like can have late breaking news stories e-mailed to their fixed computer system, which has a comparatively non-limited capacity memory and display screen.

While the foregoing are remarkable advancements in the ability to provide timely and widespread information, the extent of the information necessarily must be limited. Normally, information transmitted to PDAs, cell phones, pagers, and the like has been pared down in order to best utilize the display capacity. For stock quotes and other small content items, the wireless limited display capacity device works well to communicate the full story, but for a lot of information, the displays on the wireless devices are too small and communicate only part of the story. Therefore, it would be highly desirable to offer a user greater access to a depth of information, a depth and fullness greater than that provided on a limited capacity presentation apparatus.

### Summary of the Invention

The present invention encompasses the method and apparatus for conveying of a full-length information set to a user of a limited capacity presentation apparatus by sending a truncated information set to the user's limited capacity presentation apparatus. When a signal is received from the user to send a full length information set to an essentially non-limited capacity presentation apparatus, the full length information set is sent to the essentially non-limited capacity presentation apparatus.

### Brief Description of the Drawings

FIG. 1 is a block diagram of a communications arrangement that may employ the present invention.
FIG. 2 is a block diagram of a communications arrangement for a specific example of information delivery that may be employed in the present invention.
FIGS. 3A, 3B, and 3C are illustrations of a display screen for a limited capacity presentation apparatus that may employ the present invention.
FIG. 4 is an illustration of a web page example of a non-limited capacity presentation apparatus that may employ the present invention.
FIGs. 5A and 5B, taken together, is a flowchart of a process of providing full-length information that may be employed in the present invention.

### Detailed Description of a Preferred Embodiment

The present invention encompasses method and apparatus that delivers a truncated or summarized information set to a user's cellular telephone, PDA, pager, or similar human-perceptible, limited capacity presentation apparatus. From this truncated information set, a full length information set can be requested to be delivered to an apparatus having a large capacity presentation capability, such as a printer, an e-mail message file, a web page, or similar essentially non-limited capacity presentation apparatus.

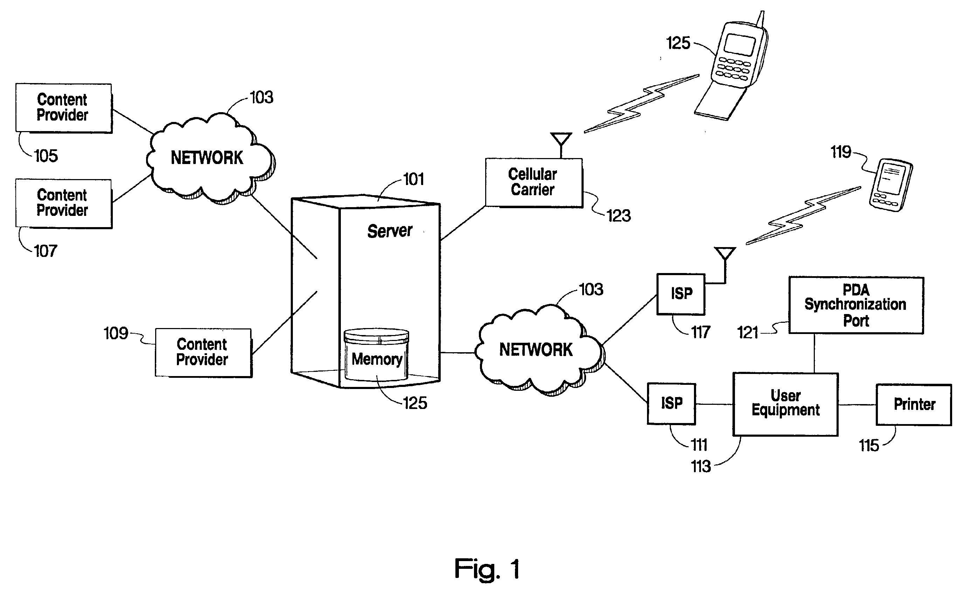

A block diagram of a communication arrangement that may employ the present invention is shown in FIG. 1. A server 101, which is of a type generally known to those practicing in the art, is configured to provide an information delivery service to users. Interconnection between the server 101 and a network 103, such as the Internet, is conventionally accomplished to provide communication channels to content providers 105, 107 and users of the information delivery service. The interconnections shown are, of course, representative since the communication between the server, the content providers, and users is expected to be flexible. Accordingly, another of the content providers 109 is shown as having a direct connection to the server.

Information can be delivered to a user by way of an internet service provider (ISP) 111, the user's own equipment 113 (for example a computer and modem), and a human-perceptible presentation apparatus such as a printer 115. Or, information may be carried by an ISP 117 to a two way radio frequency apparatus and transmitted to a wireless PDA 119 for presentation to the user on the PDA display. The wireless PDA 119, as well as non-wireless PDAs, usually have the capability of synchronizing with the user's home (or work) computer system. A PDA synchronization port 121 is shown, which provides synchronization of the PDA with the user equipment 113 and information delivery when the PDA is proximate to (for example, in electrical contact or within infrared electromagnetic propagation distance) the synchronization port 121. A cellular carrier 123 may also deliver information from the server 101, or from the network 103, to a user's cellular radiotelephone 125. A related information delivery system is that of a paging service (not shown), which accepts information from the server and delivers it via electromagnetic wave propagation to a user's pager.

In a preferred embodiment of the present invention, a user would arrange with the information delivery provider to have information delivered to the user's portable apparatus. As part of the arrangement, the user provides profile data that, *inter alia,* characterizes the user's preferred portable apparatus and a preferred large capacity presentation apparatus. This data is stored in server memory 125. By way of a first example, we will assume a user has a wireless PDA and desires full information sent to a printer 115. The user has specified that alert information relating to stock market quotations for Corporation A be transmitted to the user's PDA when the PDA is logged-on to the service. The information delivery service server 101, via the network 103, obtains stock market information from the content provider 105. Included among the obtained stock market information are stock quotation headlines and summaries as well as detailed analyses and company profiles. (In an alternative embodiment, the information delivery service server itself extracts or truncates information obtained from a content provider). Since the user has specified that alert information be sent to the user's PDA, a Company A stock market quotation headline (or other information truncation) is formatted for the limited capacity PDA screen and transmitted by way of the network 103 to the ISP 117 for radio transmission to the wireless PDA 119.
The user may have an interest in the more detailed analysis and can select an indicator of these analysis to be returned to the information service provider. The selection is transmitted by the PDA 119 to the ISP 117 and this selection signal is conveyed back to the server 101 via network 103. As specified in the user's profile in memory 125, the essentially non-limited presentation apparatus is the printer 115. The full length press release is formatted for the printer by the server 101 and sent to the printer for a hard copy print-out of the press release to be created. In an advanced version of the server, a successful completion of the print job is received from the user equipment 113 and the server 101 transmits a notification of the successful printing to the PDA 119.

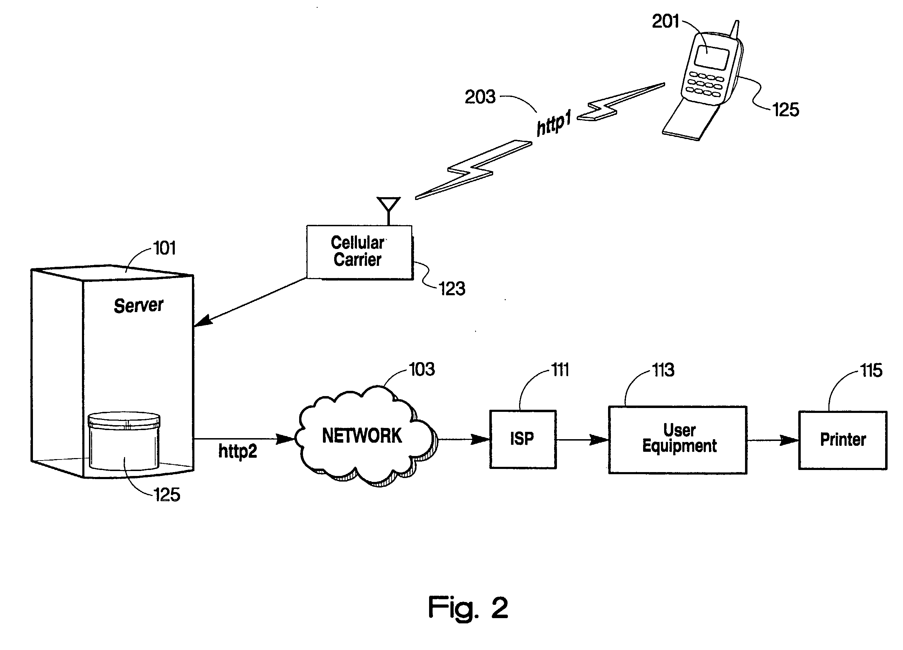

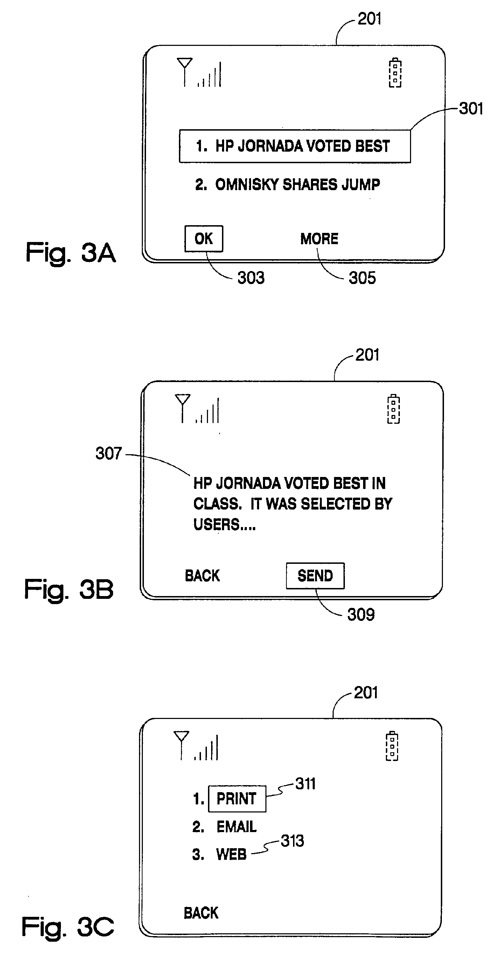

A second example of information delivery which may employ the present invention is illustrated in FIG. 2. In this example, a news service providing alerts to a cellular telephone 125 accomplishes this task from its server 101 via the cellular carrier 123. The display screen 201 of the cellular telephone makes the news alerts perceptible by the human user. An example of two news alerts are illustrated on the screen of FIG. 3A. Only a limited number of characters for each line of the display are available and only a limited number of lines may be used. The user may scroll through the lines for topics of interest. Here, the user views, and the cellular telephone highlights, one of the lines, for example line 301. It is this line for which the user would like to have more information, in fact, a full length report of the topic highlighted. Once the line is highlighted, the user is invited to select a delivery mode by using one of the soft keys at the bottom of the cellular telephone display. In this embodiment, two choices are available: OK and MORE. The user selects the OK soft key 303, which means that the user wants the full length content delivered to the non-limited capability apparatus that was previously selected when the user established the user's profile with the service provider. The cellular telephone, in the preferred embodiment, composes an HTTP formatted signal (illustrated as radio message 203 in FIG. 2), including an identification of the truncated content (for example #1234), a pre-established user identification number (for example #432), and a selection of the non-limited capacity presentation apparatus (which, in this example, is mi=cell, the code for the non-limited capacity presentation apparatus stored in the user's profile). In a preferred embodiment, this signal, http1, is of the form: http://server/wap?PubID=1234?UID=432?Mi=cell.

The signal 203 is passed by the cellular carrier 123 to the server 101. The server 101 receives the request signal, identifies the user, recalls the default non-limited capacity presentation apparatus characteristics from the user's profile, formats the full-length information accordingly and sends the formatted full length information to the selected non-limited capacity presentation apparatus. In this second example, the user's default (pre-stored profile selection) non-limited capacity presentation apparatus is a printer. Thus, the full-length information (which is preferably stored at the server in XML format) is reformatted into a format compatible with the user equipment and printer and sent, via any intervening network 103 and ISP 111 to the user equipment 113 and printer 115. In a preferred embodiment, the reformatted full length information set, http2, is reformatted into http format.

The user could have selected the MORE soft key 305 (FIG. 3A) on the cellular telephone to present a second display screen (illustrated in FIG. 3B) to the user. This second screen, in a preferred embodiment, provides a short abstract 307 of the highlighted title information of the first screen (FIG. 3A). Assuming that the user wishes to select a non-limited capacity presentation apparatus rather than use the apparatus predetermined as part of the user's profile, the user will activate the SEND soft key 309, which leads to a third screen, illustrated in FIG. 3C. The user can scroll through the non-limited capacity presentation apparatus available that are displayed on this screen. In this example, the user selects PRINT, 311, to cause the full length information set related to the selected truncated information set headline 301 and abstract 307 to be sent to the user's printer 115. The signal returned to the server contains the indication "print" rather than "cell", and the server formats for the user selected non-limited capacity presentation apparatus rather than for the profile-stored non-limited capacity presentation apparatus.

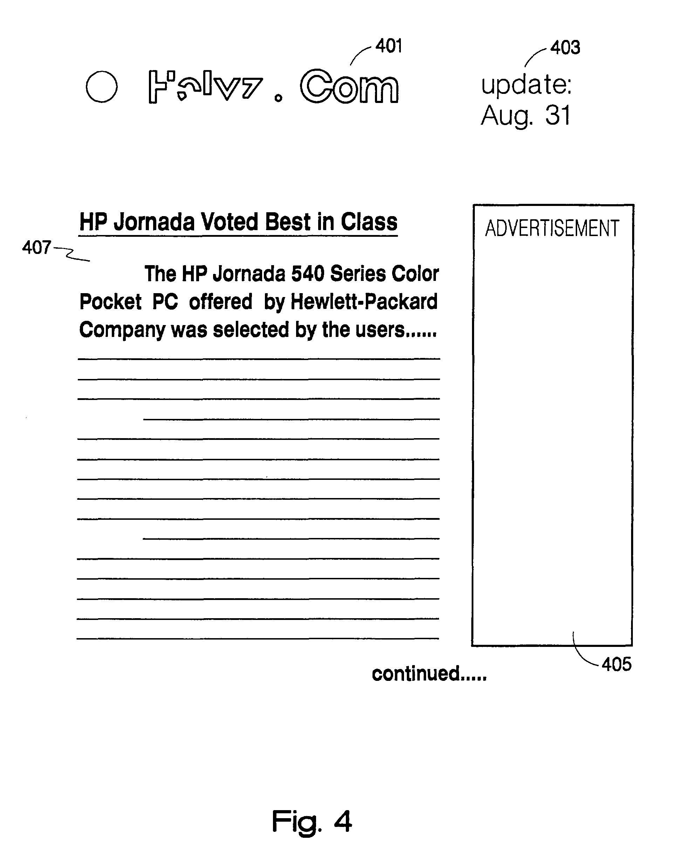

If the user had selected WEB, 313, the signal returned to the server would contain "web" to indicate that the user desired the full length information set to be displayed on a web page. The server 101, as a result, would set the non-limited capacity presentation apparatus to the characteristics of a web page and the full-length information would be reformatted from XML to HTML compatible with a web page. This formatted full-length information is then sent to the web page for the user. In a preferred embodiment, the web page is hosted by the server itself. Effectively, the server 101 can be accessed in this mode as a conventional Internet web site and pages browsed in a conventional form. In fact, the information service provider may have a publicly accessible web information site. Uniquely available to a subscribing user, in a preferred embodiment, is a web page that displays full-length information selected by the user when using the user's limited capacity presentation apparatus. In the current example, the user highlighted a line activated the WEB option 313. The server 101 placed the full-length information on the unique web page for the user. An illustration of such a web page is shown in FIG. 4.

The design of the web page and the mechanism for limiting access to the user is a choice left to the information service provider. Thus, the information service provider's identifying marks 401, ancillary information 403, and advertising 405 are placed at the service provider's option. The full-length message 407 is displayed for the user to read at leisure. It should be noted that the truncated information in the present example is a true truncation of the title of the full-length information. The information service provider (or the original content provider) may have the capacity to summarize or headline the full-length information in other meaningful ways. The inventor of the present invention uses the word truncation in a broad sense to encompass summarizing, headlining, keyword selecting, or other human-understandable meaning compression for use in the limited capacity presentation apparatus.

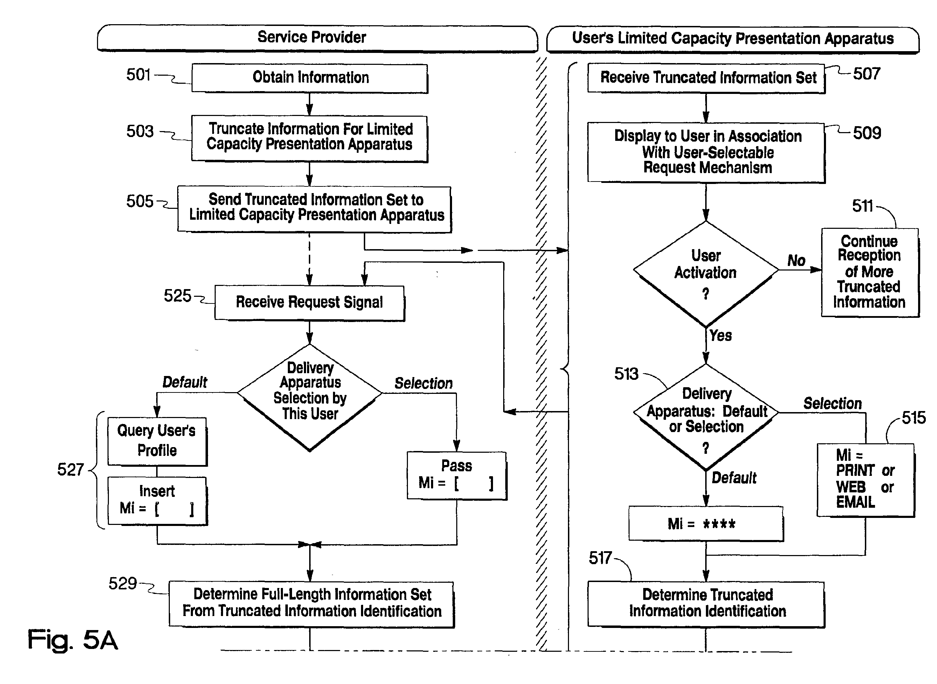

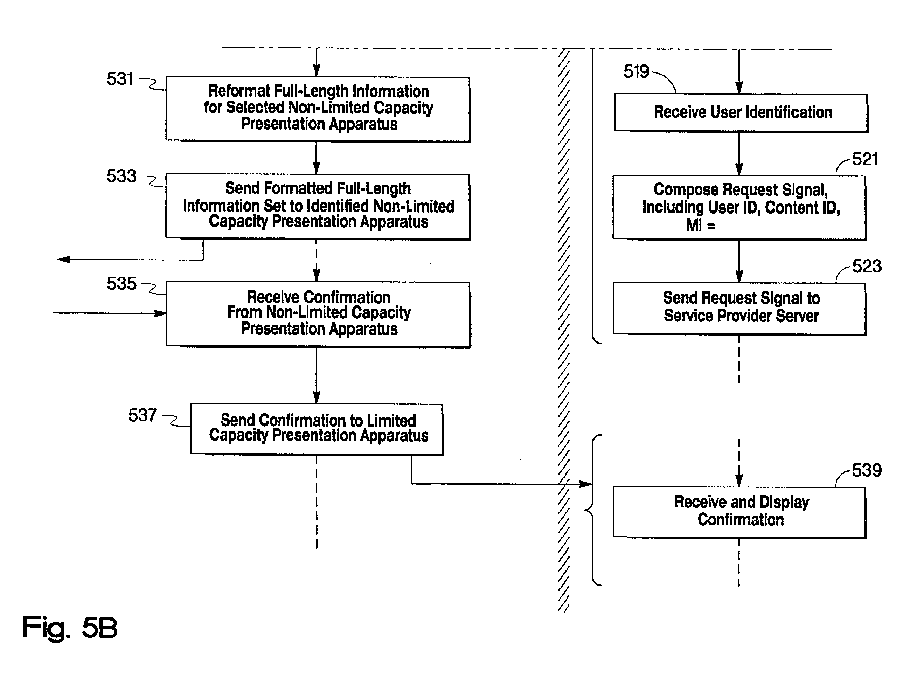

The general process of information and signal exchange between the server 101 and the limited capacity presentation apparatus is shown in the flowchart of FIGs. 5A and 5B. The left half of this flowchart is directed to the process followed by the server in realizing a preferred embodiment of the present invention. The right half of this flowchart is directed to the process followed by the limited capacity presentation apparatus in realizing the preferred embodiment of the present invention. Interchange of information and signals between the two entities is asynchronous and each of the two entities will be undertaking other tasks while open to a response from the other entity.

The server obtains information, at 501, from content providers and truncates (or otherwise compresses) the information, at 503, for delivery to limited capacity presentation apparatus. The truncated information is sent to the limited capacity presentation apparatus, at 505. The limited capacity presentation apparatus receives the truncated information, at 507, and displays the truncated information to the user along with a user-selectable request mechanism, at 509, to enable the user to request full-length information to be sent to another apparatus that has capacity for presentation of large amounts of information. If the user makes no selection, the limited capacity presentation apparatus continues to receive and display truncated information, at 511. If the user selects a set of truncated information for full-length delivery, a determination, at 513, of whether the pre-established non-limited capacity presentation apparatus of the user's profile is to be used or whether the user wants to select a different non-limited capacity presentation apparatus. In a preferred embodiment, the selection, at 515, is among a printer (PRINT), a web page (WEB), or e-mail message (EMAIL).

The information service provider identifies each truncated information set with an identification number, which is generally not made available to the user. This identification number, however, is returned to the information service provider if the truncated information is selected by the user. Thus, the limited capacity presentation apparatus determines the truncated information identification, at 517, and recalls the user identification, at 519. These two identifications and the non-limited capacity presentation apparatus selection or default are composed into a request signal, preferably an HTML formatted signal, at 521, and sent to the server, at 523.

Upon receipt of the request signal, at 525, a determination of the user's selection/default choice of non-limited capacity presentation apparatus is made, at 527. The desired full-length information is identified from the truncated information identification of the request signal, at 529, and the full-length information is reformatted, at 531, to be compatible with the nonlimited capacity presentation apparatus determined in the delivery apparatus step. The formatted full-length information is then sent to the identified nonlimited capacity presentation apparatus, at 533. In advanced implementations of the preferred embodiment, the nonlimited capacity presentation apparatus is programmed to provide a response indicating that the full-length information has been received and/or presented. This response is received by the server, at 535, and a confirmation is sent to the limited capacity presentation apparatus, at 537. The limited capacity presentation apparatus displays the confirmation, at 539.

Thus, a method and apparatus for providing greater depth of information to users of limited capacity presentation apparatus has been described. Users can identify from truncated (or otherwise compressed) information presented at the limited capacity presentation apparatus for which more depth is requested. Full-length information is sent to a nonlimited capacity presentation apparatus for the user.

## Claims

1. A method of receiving information comprising the steps of:
receiving (507) a truncated information set on a limited capacity presentation apparatus (125);
selecting (513, 515, 517) at least a portion of said truncated information set;
transmitting (523) a signal indicating said selection; and
receiving, as a result of said transmission of said signal, a full information set on an essentially non-limited capacity presentation apparatus (113, 115).

2. A method in accordance with the method of claim 1, further comprising the steps of:
identifying (519) a specific essentially non-limited capacity presentation apparatus; and
including (521) said identification into said signal.

3. A method in accordance with the method of claim 2 wherein said step of identifying a specific essentially non-limited capacity presentation apparatus further comprises the step of identifying one of a printer, a web page, and e-mail as said specific essentially non-limited capacity presentation apparatus.

4. A method in accordance with the method of claim 1 wherein said step of receiving a truncated information set on a limited capacity presentation apparatus further comprises the step of receiving a truncated information set on one of a cellular telephone, a PDA, and a pager.

5. A method in accordance with the method of claim 4 wherein said step of receiving a truncated information set further comprises the step of synchronizing said PDA to a synchronization port when said truncated information set is received on a PDA.

6. A method of conveying information to a user, comprising the steps of:
sending (505) a truncated information set to a limited capacity presentation apparatus (125); and
receiving (525) a signal from said limited capacity presentation apparatus to send a full length information set to an essentially non-limited capacity presentation apparatus (113, 115).

7. A method in accordance with the method of claim 6 further comprising the steps of:
obtaining (501) said full length information set;
reformatting (503) said full length information set into a format compatible with said non-limited capacity presentation apparatus; and
sending (533)said full length information set to said essentially non-limited capacity presentation apparatus

8. A method in accordance with the method of claim 7 further comprising the step of detecting (535) that said essentially non-limited capacity presentation apparatus has received said full length information set.

9. A method in accordance with the method of claim 8 further comprising the step of sending (537) a confirmation of said full length information set by said essentially non-limited capacity presentation apparatus to said limited capacity presentation apparatus.

10. A server (101) that conveys information to a user, comprising:
a communication link that conveys a truncated information set to a limited capacity presentation apparatus (125);
a receiver that accepts a signal (523) from a user requesting a full length information set;
a memory (125) that stores transmission parameters of a user's essentially non-limited capacity presentation apparatus; and
a communication link that conveys said full length information set to said user's essentially non-limited capacity presentation apparatus (113, 115) when said signal is accepted by said receiver.
